# EUROPÄISCHE PATENTSCHRIFT

(11) **EP 0 580 270 B1**
(45) Veröffentlichungstag und Bekanntmachung des Hinweises auf die Patenterteilung: **24.07.1996**
(21) Anmeldenummer: 93250123.2
(22) Anmeldetag: 28.04.1993
(51) Int. Cl.: H02H 7/20, H02P 7/06, B61L 5/06

(54) **Schaltung zur Steuerung eines Polwendeschalters**
Circuit for controlling a pole-changer
Circuit de commande d'un commutateur inverseur

(30) Priorität: 24.06.1992 DE 9208468 U
(43) Veröffentlichungstag der Anmeldung: 26.01.1994
(73) Patentinhaber: SIEMENS AKTIENGESELLSCHAFT, 80333 München (DE)
(72) Erfinder: Zeller, Christoph, W-3300 Braunschweig (DE)

(56) Entgegenhaltungen:
- DE-A- 2 059 047
- DE-A- 3 638 681

## Beschreibung

Die Erfindung bezieht sich auf eine Schaltung nach dem Oberbegriff des Anspruches 1.

Für die Steuerung eines solchen Polwendeschalters werden in zunehmendem Maße elektronische Schalter verwendet. Diese elektronischen Schalter haben ein Ausfallverhalten, daß im Einzelfall nicht bekannt ist. Es muß daher mit der Möglichkeit gerechnet werden, daß einer der elektronischen Schalter nicht mehr in den hochohmigen Schaltzustand gelangt. Für diesen Fall ist dafür zu sorgen, daß eine Stellmotornotabschaltung wirksam wird, die diesen sicher vom Netz trennt.

Aufgabe der Erfindung ist es, eine derartige Notabschaltung für eine nach dem Oberbegriff des Anspruches 1 ausgebildete Schaltung anzugeben.

Die Erfindung löst diese Aufgabe durch die kennzeichnenden Merkmale des Anspruches 1. Vorteilhafte Ausgestaltungen und Weiterbildungen der erfindungsgemäßen Schaltung sind in den Unteransprüchen angegeben.

Die Erfindung ist nachstehend anhand eines in der Zeichnung dargestellten Ausführungsbeispieles näher erläutert. Die Zeichnung zeigt in
Figur 1 die erfindungsgemäße Schaltung und in
Figur 2 die konkrete Ausbildung des Polwendeschalters.

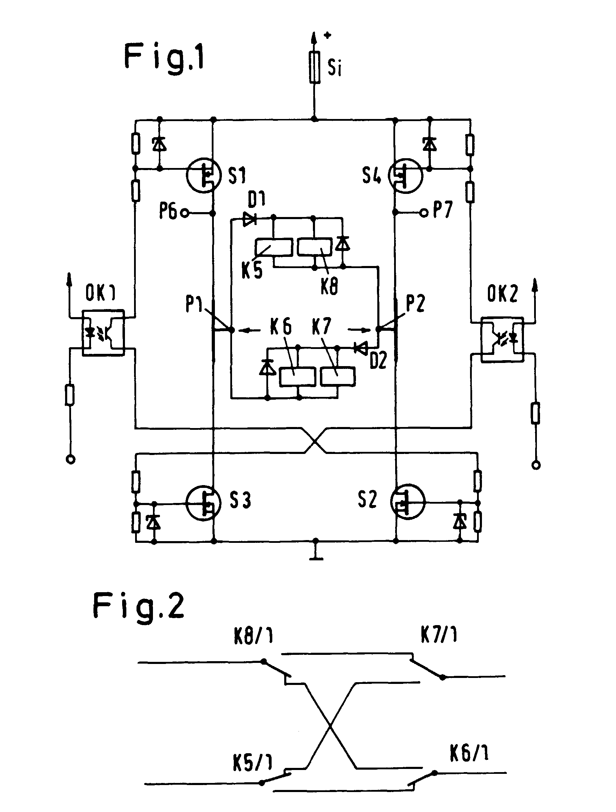

Der Polwendeschalter besteht aus insgesamt vier Umschaltkontakten K5/1, K6/1, K7/1 und K8/1. Diese Kontakte werden gesteuert durch zugehörige Relais K5 bis K8 in Figur 1. Die auf der Eingangs- und auf der Ausgangsseite des Polwendeschalters angeordneten Kontakte K5/1 und K8/1 bzw. K6/1 und K7/1 werden jeweils gemeinsam umgesteuert. Bei Verwendung von Relais mit mindestens jeweils zwei Umschaltkontakten können die auf der gleichen Seite des Polwendeschalters angeordneten Kontakte von jeweils nur einem einzigen Relais gesteuert werden. Die Anordnung der Kontakte des Polwendeschalters ist so gewählt, daß der Speisekreis für den angeschlossenen Stellmotor im stromlosen Zustand der Relais K5 bis K8 jeweils zweipolig unterbrochen ist und zwar über je einen der Kontakte K8/1 und K6/1 bzw. K7/1 und K5/1. Werden in noch zu erläuternder Weise z. B. die Relais K5 und K8 erregt, so wechseln deren Kontakte und es kommt ein Stromfluß über die in Figur 2 jeweils waagerecht verlaufenden Verbindungsleitungen zwischen den Kontakten K8/1 und K7/1 sowie K5/1 und K6/1 zustande. Werden dagegen die Relais K6 und K7 angeschaltet, so wird dem Stellmotor über die in der Zeichnung gekreuzten Verbindungsleitungen zwischen den Kontakten K8/1 und K6/1 sowie K5/1 und K7/1 eine gegenphasige Spannung zugeführt, die zum Reversieren des Motors führt.

Zum An- und Abschalten der Relais K5 bis K8 dienen elektronische Schalter S1 bis S4, die beispielsweise als Feldeffekttransistoren ausgebildet sind. Die vier elektonischen Schalter bilden eine Brückenschaltung, deren Diagonalzweig durch die einander über gegenpolig geschaltete Dioden parallelgeschalteten Relaispaare K5 und K8 sowie K6 und K7 gebildet wird. Die Anordnung ist so getroffen, daß zum Umlaufen des Motors üblicherweise zwei der sich in der Brücke jeweils gegenüberliegenden elektronischen Schalter S1 und S2 bzw. S3 und S4 gemeinsam angeschaltet werden.

Hierzu dienen als Optokoppler ausgebildete Schalter OK1 und OK2, die das Steuerpotential für die ihnen zugeordneten elektronischen Schalter schalten.

Zum Umlaufen des Motors in die eine Richtung wird z. B. der Optokoppler OK1 angeschaltet, der daraufhin die beiden elektronischen Schalter S1 und S2 durchsteuert. Dabei fließt ein Steuerstrom über den Schalter S1, die Diode D1, die Relais K5 und K8 und den elektronischen Schalter S2, wobei die beiden Relais K5 und K8 ansprechen und ihre Schaltkontakte in Figur 2 in die dort nicht dargestellte Lage umsteuern. Nachdem der Stellmotor die angestrebte Endlage erreicht hat, wir durch nicht dargestellte Überwachungsmaßnahmen der Optokoppler OK1 abgeschaltet. Die bislang durchgesteuerten elektronischen Schalter S1 und S2 werden wieder hochohmig und die bislang erregten Relais K5 und K8 werden abgeworfen. Dabei wechseln deren Schaltkontakte wieder in die in Figur 2 dargestellte Schaltstellung.

Soll zu einem späteren Zeitpunkt der Stellmotor in die andere Richtung laufen, so wird der Optokoppler OK2 eingeschaltet, der dafür sorgt, daß die elektronischen Schalter S3 und S4 niederohmig geschaltet werden. Nunmehr kommt ein Stromschluß über den elektronischen Schalter S4, die Diode D2, die Relais K6 und K7 sowie den elektronischen Schalter S3 zustande. Die Relais K6 und K7 werden erregt und steuern ihre Schaltkontakte in Figur 2 um. Auch hier wird nach dem Erreichen der neuen Endlage durch Abschalten des Optokopplers OK2 der Speisekreis für die Relais K6 und K7 aufgetrennt, so daß bei Abfallen der Relais deren Schaltkontakte wieder in die in Figur 2 dargestellte Schaltstellung wechseln.

Der Schaltzustand der elektronischen Schalter läßt sich durch Abgriff von Spannungen an den Meßpunkten P6 und P7 unschwer erkennen und bewerten. So liegt z. B. an dem Meßpunkt P6 bei durchgeschaltetem elektronischen Schalter S1 positives und bei durchgeschaltetem elektronischen Schalter S3 negatives Potential an. Entsprechend verhält es sich mit dem Meßpunkt P7; ist keiner der Optokoppler OK1 und OK2 angeschaltet, so ist - ordnungsgerechtes Schaltverhalten der elektronischen Schalter vorausgesetzt - an den Meßpunkten auch kein Potential abgreifbar. Wenn nun festgestellt wird, daß einer der elektronischen Schalter nicht mehr ordnungsgerecht steuerbar ist, insbesondere daß er aus seinem leitenden Zustand nicht mehr in den sperrenden Zustand übergeht, wird eine Notabschaltung für den Motor herbeigeführt. Die Notabschaltung führt zum zweipoligen Auftrennen der Versorgungsleitungen zum Stellmotor. Durch die Notabschaltung wird erreicht, daß sofort nach dem detektieren des Störfalles die Ansteuerung der Relais K5 bis K8 unterbrochen wird, so daß die Gefahr, daß zu dem ersten, noch ungefährlichen Fehler ein zweiter Fehler hinzukommt, der zu einem Einstellen des Polwendeschalters in eine ganz bestimmte Schaltstellung führen könnte, abgewendet ist. Das Unwirksamschalten des Polwendeschalters geschieht in der Weise, daß beim Erkennen des eingetretenen Störfalles beide Optokoppler OK1 und OK2 eingeschaltet werden, so daß Kurzschlußwege über die elektronischen Schalter S1 und S3 sowie S4 und S2 entstehen und ein wesentlich höherer Strom fließt gemeinsam als der bei ordnungsgerechtem Betriebszustand der Schaltung. Der Strom ist so bemessen, daß er eine in die Zuleitungen geschaltete Sicherung Si zum Ansprechen bringt. Diese Sicherung kann als Schmelzsicherung oder als Automat ausgeführt sein. Als Folge des Ansprechends der Sicherung Si bleiben die Relais K5 bis K8 irreversibel abgeworfen, wobei ihre Kontakte in der in Figur 2 dargestellte Schaltstellung verharren und damit das Abtrennen des Stellmotors vom Netz bewirken.

Um den Polwendeschalter im Störungsfall zuverlässig abschalten zu können , ist sicherzustellen, daß die Kurzschlußwege im Störungsfall auch tatsächlich erreicht werden können durch Überstrom die Sicherung ansprechen lassen. Aus diesem Grunde sind die Anschlüsse der einander über die Dioden parallelgeschalteten Relais jeweils in einem Anschlußpunkt P1 bzw. P2 zusammengeführt und mit diesem Anschlußpunkt direkt oder über eine Zuleitung an eine die beiden elektronischen Schalter auf der einen bzw. der anderen Seite der Brücke durchgängig verbindende Leitung angeschlossen. Auf diese Weise wird sichergestellt, daß von den elektronischen Schaltern aus über die gesamte Länge der Kurzschlußwege jeweils auf beide Relaispaare zugegriffen werden kann. Die Leitungen, über die die Notabschaltung des Motors herbeigeführt werden soll, sind gänzlich in den Anschaltstromkreis der einzelnen Relaispaare zum Umlaufen in die eine oder andere Drehrichtung des Antriebes einbezogen; damit ist nicht zu rechnen, daß zum Zeitpunkt der Auslösung der Notabschaltung durch unterbrochene Zuleitungen kein Kurzschluß möglich ist.

Die erfindungsgemäße Schaltung läßt sich mit Vorteil auch anwenden für Polwendeschalter, die im stromlosen Zustand keine zweipolige Auftrennung der Speiseleitungen zum zu steuernden Verbraucher bewerkstelligen. Hier muß beim Auftreten eines Defektes, der sich durch Überwachen der Spannungen an den Meßpunkten P6 und P7 feststellen läßt, auf in der Schaltung nicht dargestellte Schütze eingewirkt werden, die den Speisekreis zum Verbraucher auftrennen.

## Patentansprüche

1. Schaltung mit zwei jeweils im Wechsel anschaltbaren Schaltanordnungen (K₅, K₈; K₆, K₇) zur Steuerung eines Polwendeschalters im Speisekreis eines reversierbaren Stellmotors, insbesondere eines Weichenantriebsmotors,
**dadurch gekennzeichnet,**
daß eine aus vier elektronischen Schaltern (S1 bis S4) bestehende Gleichstrom-Brückenschaltung vorgesehen ist, deren Diagonale durch die beiden Schaltanordnungen (K5, K8; K6, K7) gebildet wird,
daß die Schaltanordnungen einander parallelgeschaltet sind, jeweils auf Spannungen oder Ströme unterschiedlicher Polarität bzw. Richtung ansprechen und beim Schließen jeweils von zwei der sich diagonal gegenüberliegenden elektronischen Schalter (S1 und S2 bzw. S3 und S4) anschaltbar ist und
daß im Speisekreis der Brückenschaltung eine Sicherung (Si) angeordnet ist, die beim gemeinsamen Ansprechen beider Schaltanordnungen durch Überstrom auslöst.

2. Schaltung nach Anspruch 1, **dadurch gekennzeichnet,** daß die Schaltanordnungen über jeweils in Durchlaßrichtung betriebene Gleichrichter parallelgeschaltete Relais oder Relaispaare (K5, K8; K6, K7) dargestellt sind.

3. Schaltung nach Anspruch 1, **dadurch gekennzeichnet,** daß die elektronischen Schalter (S1 bis S4) als Transistoren ausgebildet sind und daß die Steuerspannungen für die jeweils paarweise zu schaltenden Transistoren jeweils von einem gemeinsamen Schalter (OK1, OK2) schaltbar sind.

4. Schaltung nach einem der Ansprüche 1 bis 3, **dadurch gekennzeichnet**, daß die Anschlüsse der einander parallelgeschalteten Schaltanordnungen jeweils zusammengeführt sind und daß diese gemeinsamen Anschlußpunkte (P1, P2) an durchgehende Zuleitungen zu den auf der gleichen Seite der Brücke angeordneten elektronischen Schaltern (S1, S3; S4, S2) angeschlossen sind.

5. Schaltung nach Anspruch 1, **dadurch gekennzeichnet**, daß der Polwendeschalter so ausgeführt ist, daß er im stromlosen Zustand die Zuleitungen zum Stellmotor zweipolig auftrennt.

6. Schaltung nach Anspruch 1 oder 2, **dadurch gekennzeichnet**, daß der aktuelle Schaltzustand der Schaltanordnungen durch Einlesen entsprechender Zustandsmeldungen (P₆, P₇) in eine Überwachungseinrichtung laufend überwacht ist.

## Claims

1. Circuit having two circuit arrangements (K₅, K₈; K₆, K₇) which can be respectively connected alternately for controlling a pole-changing switch in the supply circuit of a reversible servomotor, in particular a point mechanism motor, characterised in that there is provided a d.c. bridge circuit consisting of four electronic switches (S1 to S4), the diagonal of which bridge circuit is formed by the two circuit arrangements (K5, K8; K6, K7), in that the circuit arrangements are connected in parallel with each other and respond in each case to voltages or currents of different polarity or direction, and can be connected upon the respective closure of two of the diagonally opposite electronic switches (S1 and S2, and S3 and S4, respectively), and in that, in the supply circuit of the bridge circuit, there is arranged a fuse (Si) which is tripped by excess current when both circuit arrangements respond together.

2. Circuit according to claim 1, characterised in that the circuit arrangements are represented by relays or pairs of relays (K5, K8; K6, K7) connected in parallel by way of rectifiers operated in the conducting direction in each case.

3. Circuit according to claim 1, characterised in that the electronic switches (S1 to S4) are formed as transistors, and in that the control voltages for the transistors, which are to be respectively connected in pairs, can be respectively connected by a common switch (OK1, OK2).

4. Circuit according to one of claims 1 to 3, characterised in that the respective connections of the circuit arrangements connected in parallel to one another are brought together, and in that these common connecting points (P1, P2) are connected to through supply lines to electronic switches (S1, S3; S4, S2) arranged on the same side of the bridge.

5. Circuit according to claim 1, characterised in that the pole-changing switch is designed so that, in the de-energized condition, it separates the supply lines to the servomotor in a bipolar manner.

6. Circuit according to claim 1 or 2, characterised in that current circuit state of the circuit arrangements is constantly monitored by reading appropriate status messages (P₆, P₇) into a monitoring device.

## Revendications

1. Circuit comportant deux montages (K5, K8 ; K6, K7) pouvant être branchés en alternance et destiné à la commande d'un inverseur de pôles dans le circuit d'alimentation d'un servomoteur réversible, notamment d'un moteur de manoeuvre d'un aiguillage,
caractérisé en ce que
il est prévu un circuit de pont à courant continu, qui est constitué de quatres interrupteurs électroniques (S1 à S4) et dont la diagonale est formée par les deux montages (K5, K8 ; K6, K7),
les montages sont branchés en parallèle l'un avec l'autre, réagissent à des tensions ou courants de polarité ou de sens différents et peuvent être branchés lors de la fermeture de deux des interrupteurs (S1 et S2 ou S3 et S4) électroniques en vis-à-vis suivant la diagonale et
il est disposé dans le circuit d'alimentation du circuit en pont un coupe-circuit (Si), qui se déclenche par surintensité de courant, lorsque les deux montages réagissent en commun.

2. Circuit suivant la revendication 1,
caractérisé en ce que les montages sont constitués chacun de relais ou de paires de relais (K5, K8 ; K6, K7) branchés en parallèle par l'intermédiaire de redresseurs fonctionnant dans le sens passant.

3. Circuit suivant la revendication 1,
caractérisé en ce que les interrupteurs électroniques (S1 à S4) sont sous forme de transistors et les tensions de commande des transistors à faire conduire/bloquer par paire peuvent être appliquées par un interrupteur (OK1, OK2) commun.

4. Circuit suivant l'une des revendications 1 à 3,
caractérisé en ce que les bornes des montages branchés en parallèle l'un avec l'autre sont interconnectées et ces points (P1, P2) communs de raccordement sont connectés à des conducteurs d'alimentation directs vers les interrupteurs (S1, S3 ; S4, S2) électroniques disposés du même côté du pont.

5. Circuit suivant la revendication 1,
caractérisé en ce que l'inverseur de pôle est tel qu'il sépare, à l'état sans courant, les conducteurs d'alimentation vers le servomoteur par deux pôles.

6. Circuit suivant la revendication 1 ou 2,
caractérisé en ce que l'état instantané de commutation des montages est contrôlé de manière continue par mémorisation de messages (P6, P7) d'état correspondants dans un dispositif de contrôle.
